# EUROPÄISCHE PATENTANMELDUNG

(11) **EP 1 424 659 A1**
(43) Veröffentlichungstag der Anmeldung: **02.06.2004**
(21) Anmeldenummer: 04004846.4
(22) Anmeldetag: 21.08.1998
(51) Int. Cl.: G07C 9/00, H04Q 7/38, G07F 7/10

(54) **Elektronisches Gerät und Verfahren zur Authentifikation eines Benutzers dieses Gerätes**

(30) Priorität: 21.04.1998 DE 19817770
(62) Teilanmeldung aus: 98948818.4
(71) Anmelder: SIEMENS AKTIENGESELLSCHAFT, 80333 München (DE)
(72) Erfinder: Karmann, Klaus-Peter, Dr., 80999 München (DE)

(57) **Zusammenfassung**

Das Gerät besitzt Sensoren (SE) zur Erfassung biometrischer Merkmale BM (z.B. Fingerabdrücke) und eine Eingabeeinrichtung zur Eingabe von Authentifikationsdaten AUTINF (z.B. PIN). Eine Datenverarbeitungseinrichtung (DE) des Gerätes ermittelt aus den biometrischen Merkmalen BM Authentifikationsinformationen FPAUTINF, die von derselben Prüfeinrichtung PE geprüft werden, wie die über die Eingabeeinrichtung EE einzugebenden Authentifikationsinformationen AUTINF. Hierdurch kann das Gerät EG von verschiedenen Benutzern und auf die gleiche Weise benutzt werden wie Geräte ohne Sensoren für biometrische Merkmale. Die Authentifikationsregeln (z.B. für mobile Telefone über SIM-Karten) müssen nicht geändert werden, um eine Authentifikation über biometrische Merkmale zu ermöglichen.

## Beschreibung

Es sind recht verschiedenartige elektronische Geräte bekannt, vor deren Benutzung ein Benutzer sich authentifizieren muß. Wichtige Beispiele sind Computer in unterschiedlichen Ausführungen (Geräte zur Informationsvearbeitung) und Telekommunikationsgeräte wie z.B. Mobiltelefone. Einige Geräte sind generell gegen unberechtigte Benutzung z.B. durch ein Paßwort geschützt; bei anderen Geräten sind lediglich bestimmte Funktionen vor unberechtigtem Zugriff (z.B. durch eine sogenannte Personal Identification Number, PIN) geschützt. Hierzu gehört auch der Schutz des Zugangs zu bestimmten Daten oder Diensten, auch wenn diese nicht durch das Gerät sondern durch andere Geräte in einem Computer- oder Kommunikationsnetz zur Verfügung gestellt werden.

Die heute wohl häufigste Art der Eingabe einer Authentifikationsinformation ist die Eingabe über eine Tastatur des Gerätes. Nach der Eingabe wird die Richtigkeit der eingegebenen Information und damit die Berechtigung des eingebenden Benutzers durch eine Prüfeinrichtung im Gerät oder in einem Computer- oder Kommunikatinsnetz geprüft. Bei Mobiltelefonen nach dem GSM-Standard geschieht dies, indem eine Datenverarbeitungseinrichtung auf der sogenannten SIM-Card des Gerätes prüft, ob die eingegebene PIN zu der auf der SIM-Card gespeicherten Information paßt. Ist dies der Fall, gibt die SIM-Card das Mobiltelefon zur Benutzung frei. Es erhöht dabei die Sicherheit des Telefonkunden, daß nach dem GSM-Standard die PIN nicht im Gerät gespeichert werden darf, sondern nur in verschlüsselter Form auf der SIM-Card gespeichert sein darf.

Seit einiger Zeit sind Technologien verfügbar, die andere Formen der Authentifikation eines Benutzers erlauben. Diese Technologien beruhen auf der Erfassung benutzerspezifischer biometrischer Merkmale durch spezielle Sensoren. Ein wichtiges Beispiel hierfür sind Sensoren zur Erkennung des Fingerabdruckes. Andere biometrische Merkmale wie z.B. die Netzhauttextur des menschlichen Auges oder die Charakteristik einer menschlichen Stimme werden ebenfalls schon in einigen Geräten eingesetzt.

Üblicherweise werden die von den Sensoren erfaßten Merkmale in einer Datenverarbeitungseinrichtung des Gerätes oder eines Kommunikationsnetzes mit den bekannten Merkmalen eines berechtigten Benutzers verglichen, und bei hinreichender Übereinstimmung wird der Zugang zu dem gewünschten Dienst, den benötigten Daten oder der gewählten Gerätefunktion freigeschaltet.

Bei einigen Gerätetypen erscheint es sinnvoll, die beiden genannten Arten der Authentifikation miteinander zu kombinieren. Zum Beispiel bei Mobiltelefonen ist es sicher wünschenswert, daß diese nicht nur von ihrem Besitzer mittels Fingerabdrucksensor benutzt werden können, sondern daß auch andere Personen, denen die PIN mitgeteilt wurde oder die das Gerät mit ihrer eigenen SIM-Card nutzen möchten, zu einer Benutzung im Rahmen der ihnen zustehenden Berechtigung in der Lage sind. Außerdem könnte die Authentifikation mittels Fingerabdruck gelegentlich fehlschlagen oder undurchführbar sein, z.B. weil die Hände des Benutzers verschmutzt sind oder der Benutzer Handschuhe trägt. Aus diesen oder ähnlichen Gründen ist es wünschenswert oder notwendig, daß ein oder mehrere Benutzer eines Gerätes sich an diesem über unterschiedliche Wege authentifizieren können. Die biometrische Authentifikation soll in diesen Fällen neben der Authentifikation durch PIN-Eingabe möglich sein. Bei Mobiltelefonen nach dem GSM-Standard kommt hinzu, daß der Standard die Möglichkeit der Authentifikation durch PIN-Eingabe zwingend vorschreibt.

Aus der geschilderten Situation ergibt sich, daß eine Verwendung herkömmlicher biometrischer Authentifikationsverfahren bei Mobiltelefonen nach dem GSM-Standard nicht möglich ist, weil diese schon aus Gründen der Kompatibilität zum GSM-Standard die Authentifikation über die PIN mit der SIM-Card zwingend erfordern. Die zunächst sich scheinbar anbietende Möglichkeit, die PIN im Gerät zu speichern und bei erfolgreicher Prüfung der Übereinstimmung des erfaßten Fingerabdrucks mit dem gespeicherten Fingerabdruck eines berechtigeten Benutzers diese gespeicherte PIN an die SIM-Card zur Prüfung zu übergeben, scheidet aus, weil eine Speicherung der PIN im Mobiltelefon an anderer Stelle als innerhalb der SIM-Card nach dem GSM-Standard aus Sicherheitsgründen verboten ist. Die Biometrische Authentifikation käme in diesen Fällen also nur als zusätzliche Sicherung in Betracht. Eine solche zusätzliche Sicherung ist aber angesichts der hohen Sicherheit der Authentifikation der PIN-Eingabe nicht erforderlich und würde wohl auch von vielen Benutzern nicht akzeptiert.

Der Erfindung liegt daher die Aufgabe zugrunde, eine technische Lehre anzugeben, welche die Kombination einer biometrischen Benutzerauthentifikation mit einer Authentifikation durch PIN-Eingabe auch im Falle von Mobiltelefonen nach dem GSM-Standard oder in ähnlich gelagerten Fällen erlaubt, wobei jeweils eine Form der Authentifikation ausreichen soll. Der Benutzer soll also die Wahl haben, welche Art der Authentifikation er verwenden möchte. Denkbar ist allenfalls, daß ein besonders ausgezeichneter Benutzer (z.B. der Besitzer des Gerätes) die Möglichkeit erhält, die logische UND-Verknüpfung beider Authentifikationsarten am Gerät einzustellen. Diese Aufgabe wird durch ein Gerät oder durch ein Verfahren nach einem der Patentansprüche gelöst.

Die Erfindung sieht vor, daß biometrische Merkmale des Benutzers durch eine Sensoreinrichtung erfaßt werden und aus den erfaßten biometrischen Merkmalen eine zur Authentifikation dienende Information mit Hilfe mathematischer Verfahren ermittelt wird. Hierdurch steht am Ende der Auswertung der biometrischen Merkmale eine Authentifikationsinformation, die durch dieselbe Prüfeinrichtung geprüft werden kann, wie eine vom Benutzer über eine Informationseingabevorrichtung (z.B. eine Tastatur) eingegebene Authentifikationsinformation. Im einfachsten Fall ist das Ergebnis der Auswertung des Fingerabdrucks dieselbe PIN, die Benutzer auch über die Tastatur hätte eingeben können. Diese PIN wird jedoch nicht im Gerät gespeichert, sondern aus von einer Sensoreinrichtung erfaßten biometrischen Merkmalen eines Benutzers berechnet.

Durch diese Art der Auswertung der von einer Sensoreinrichtung erfaßten biometrischen Merkmale wird diese Art der Authentifikation im Ergebnis der Authentifikation über die Tastatureingabe gleichgestellt, und die übliche Schnittstelle zur Überprüfung der Gültigkeit der Authentifikationsinformation kann unverändert bleiben. Insbesondere ist keine Änderung irgendwelcher standardisierter Vorschriften notwendig. Die beiden Wege zur Authentifikation können ohne Schwierigkeiten nebeneinander benutzt werden; der Benutzer hat jederzeit und in jeder Lage die frei Wahl zwischen beiden Methoden. Es ist natürlich auch möglich beide in einer UND-Kombination zu verwenden, bei der nur derjenige Benutzer zugelassen wird, der beide Authentifikationswege erfolgreich absolviert.

Im folgenden wird die Erfindung anhand bevorzugter Ausführungsbeispiele und mithilfe von Figuren näher beschrieben.

Figur 1 zeigt ein Ausführungsbeispiel der Erfindung, bei dem alle Verfahren und Einrichtungen in einem Gerät integriert sind.

Figur 2 zeigt ein Ausführungsbeispiel der Erfindung, bei dem die Prüfeinrichtung sich nicht innerhalb des Gerätes befindet.

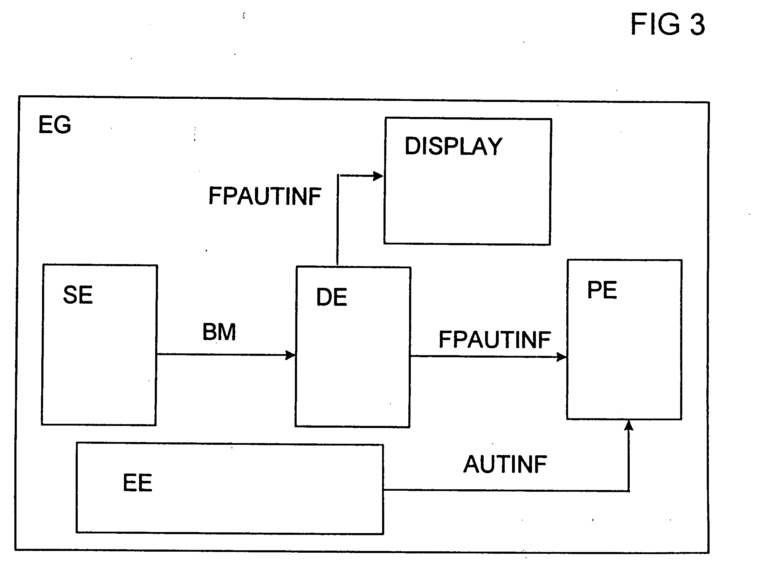

Figur 3 zeigt ein Ausführungsbeispiel der Erfindung, bei dem eine Anzeigevorrichtung zur Anzeige von Authentisierungsinformation im Gerät integriert ist.

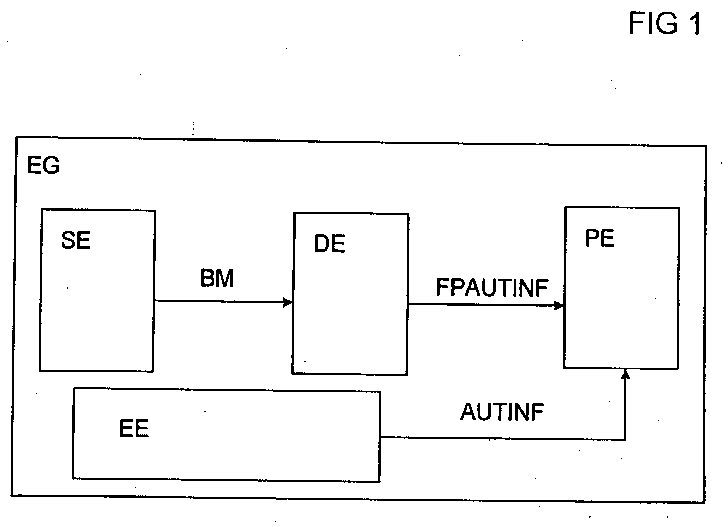

Eine recht spezielle aber wichtige Ausführungsform der Erfindung ist ein Mobiltelefon nach dem GSM-Standard, das über einen Fingerabdrucksensor für die Benutzerauthentifikation verfügt. Dieser Fingerabdrucksensor ist ein Spezialfall der in Figur 1 dargestellten Sensoreinrichtung (SE). Legt ein Benutzer des Gerätes (EG) einen Finger auf diesen Fingerabdrucksensor und erwartet das Gerät eine Authentifikation wie z.B. die Eingabe einer PIN oder SuperPIN oder PIN2 (teilweise herstellerabhängig), so erfaßt der Fingerabdrucksensor die entsprechenden biometrischen Merkmale (BM) des betreffenden Benutzers und führt diese einer Datenverarbeitungseinrichtung (DE) zu.

Im Falle des GSM-Mobiltelefons wird diese Datenverarbeitungseinrichtung der ohnehin im Mobiltelefon bereits vorhandene Prozessor in Verbindung mit einer darauf ablaufenden Software sein. Andererseits könnte aber auch der Fingerabdrucksensor (oder allgemeiner: die Sensoreinrichtung) über eine eigene Prozessoreinheit verfügen, auf der eine spezielle, die Fingerabdruckerkennung leistende Software abläuft, so daß die Datenverarbeitungseinrichtung im Sinne dieser Erfindung ganz oder teilweise in die Sensoreinrichtung integriert ist. Da die Fingerabdruckerkennung selbst wie auch andere Verfahren zur Erkennung biometrischer Merkmale und ihre Realisierung auf Datenverarbeitungseinrichtungen unterschiedlicher Konfiguration (und Partitionierung in Subsysteme oder Zusammensetzung aus bekannten Hardwaremodulen) dem Fachmann hinreichend bekannt sind, stellt dieser Abschnitt der Realisierung der Erfindung mit Sicherheit keine besonderen Probleme dar.

Gemäß der vorliegenden Erfindung ermittelt diese Datenverarbeitungseinrichtung nun aus den erfaßten biometrischen Merkmalen eine zur Authentifikation des Benutzers geeignete Information. Im einfachsten Fall ist das die auf der SIM-Karte verschlüsselt gespeicherte PIN (bzw. PIN2 oder ähnliches) des - als berechtigt angenommenen - Benutzers. Diese PIN wird nun auf die gleiche Weise an die SIM-Karte zur Prüfung übergeben, als wäre sie vom Benutzer über die Zifferntastatur (Informationseingabeeinrichtung) des Mobiltelefons eingegeben worden. Nun läuft der jedem Fachmann bekannte und im GSM-Standard vorgesehene Prüfungsvorgang in der Prüfungseinrichtung des Mobiltelefons (SIM-Karte, ggf. in Verbindung mit den Datenverarbeitungseinrichtungen des Gerätes) ab. Ist die Authentifikationsinformation (FPAUTINF) korrekt d.h. mit der auf der SIM-Karte gespeicherten PIN übereinstimmend, wird die durch die Authentifikation geschützte Gerätefunktion (z.B. der Netzzugang, etc.) freigegeben.

Es ist ein entscheidender Vorteil der beschriebenen erfindungsgemäßen Lösung, daß die Fingerabdruckerkennung im Falle des berechtigten Benutzers zur Übergabe der PIN des Benutzers an die SIM-Karte führt, denn hierdurch können die Sicherheitsvorschriften des GSM-Standards völlig unverändert bleiben. Andere, zunächst vielleicht naheliegend erscheinende Lösungen haben nicht diese vorteilhafte Eigenschaft. Jedenfalls würde jede andere Lösung entweder eine zusätzliche Eingabe der PIN über die Tastatur oder die Umgehung oder Änderung des GSM-Standards erfordern. Eine zusätzliche Eingabe der PIN über die Tastatur wäre nur sinnvoll, wenn die Fingerabdruckerkennung als zusätzliche Sicherheitsmaßnahme zur PIN-Eingabe gedacht wäre.

Solch eine zusätzliche Authentifikation ist natürlich auch mit der vorliegenden Erfindung möglich. In diesem Fall müßte man die aus den Sensordaten ermittelte Authentisierungsinformation eben nicht an die SIM-Karte übergeben. Statt dessen könnte man z.B. absichtlich eine falsche PIN an die SIM-Karte schicken oder einen Eingabefehler oder Abbruch der Eingabe oder ähnliches simulieren. Daraufhin würde die SIM-Karte erneut zur PIN-Eingabe auffordern. Ist die eingegebene PIN mit der ermittelten übereinstimmend oder kompatibel, könnte die Datenverarbeitungseinrichtung (DE) diese PIN an die SIM-Karte übergeben, woraufhin diese die Freigabe erteilen würde.

Natürlich muß die aus den Sensordaten ermittelte PIN nicht mit der SIM-Karten-PIN identisch sein. Falls der Standard oder - bei anderen Geräten - die jeweils einschlägigen Sicherheitsprotokolle dies erlauben, könnte die Prüfeinrichtung auch zwei verschiedene Authentifikationsinformationen daraufhin prüfen, ob sie zueinander passen.

Bei anderen Geräten, die nicht dem GSM-Standard unterliegen, könnte die aus den Sensordaten berechnete Authentifikationsinformation FPAUTINF auch in dem Fall der alleinigen Authentifikation durch Sensordaten (also unabhängig von und neben der PIN-Eingabe) verschieden von der über ein Tastatur eingegebenen Authentifikationsinformation AUTINF sein, solange nur die Prüfeinrichtung erkennt, daß beide zusammen passen in dem Sinne, daß beide auf den berechtigten Benutzer hinweisen.

Als Berechnungsverfahren für Authentifikationsinformation FPAUTINF aus einer BM kommen grundsätzlich alle mathematischen Abbildungen (Funktionen) in Betracht, die einem Fingerabdruck oder anderen BM eine PIN oder eine andere Form von (in der Regel alphanumerisch kodierter) Authentisierungsinformation AUTINF zuordnen, die folgende Bedingungen erfüllen:
a) hinreichend ähnliche BM führen auf die gleiche Authentifikationsinformation FPAUTINF.
b) hinreichend verschiedene BM führen auf verschiedene Authentifikationsinformationen FPAUTINF.
c) es ist für einen unberechtigten Benutzer praktisch unmöglich, die Authentifikationsinformation FPAUTINF aus dem BM oder ohne Kenntnis der BM zu ermitteln (z.B. zu erraten).

Die Bedingung a) soll sicherstellen, daß die Fingerabdruckerkennung hinreichend robust ist gegen kleine Störungen. Ansonsten wäre die Abweisungsrate berechtigter Benutzer zu hoch. Bedingung b) sorgt dafür, daß Fingerabdrücke verschiedener Benutzer mit ausreichend hoher Wahrscheinlichkeit zu verschiedenen Authentifikationsinformationen FPAUTINF führen. Die Bedeutung von Bedingung c) ist offensichtlich.

Dem Fachmann sind verschiedene mathematische Abbildungen bekannt, die diese Anforderungen (eventuell mehr oder weniger gut) erfüllen. Eine Abbildung mit diesen Eigenschaften ist durch die sogenannte Vektorquantisierung gegeben. Diese dem Fachmann eigentlich bekannte Methode soll hier nur soweit erläutert werden, wie es für das Verständnis der Erfindung erforderlich erscheint.

Bei Anwendung dieser Methode für die Zwecke der vorliegenden Erfindung wird zunächst vorausgesetzt, daß die von der Sensoreinrichtung erfaßten biometrischen Merkmale in die Form eines sogenannten Merkmalsvektors gebracht werden können. Diese Annahme ist in der Praxis keine Einschränkung, da die Sensordaten stets als geordnetes n-Tupel von n Meßdaten (Merkmalsvektor) dargestellt werden können. Die Merkmalsvektoren bilden einen n-dimensionalen Raum. In diesem existiere ein Satz von Mustervektoren (Codebuchvektoren) und es sei ein Abstandsmaß (Ähnlichkeitsmaß für biometrische Merkmale) definiert. Zu jedem Mustervektor gibt es eine Zelle in diesem Raum, die dadurch definiert ist, daß für jeden Merkmalsvektor in einer Zelle gilt, daß der Mustervektor dieser Zelle der nächstgelegene Mustervektor im Sinne dieses Abstandsmaßes ist.

Jedem Mustervektor sei eine zur Authentisierung prinzipiell geeignete Information zugeordnet. Einem Mustervektor ist die korrekte Authentisierungsinformation (z.B. die tatsächliche PIN) zugeordnet. Es ist anhand dieser Erklärungen offensichtlich, daß die Ermittlung des nächstgelegenen Mustervektors zu einem Merkmalsvektor, der den erfaßten Sensordaten entspricht, im Falle des berechtigten Benutzers auf die korrekte Information (tatsächliche PIN) führt und ansonsten eine falsche Authentisierungsinformation liefert. Die Fehlerraten dieses Verfahrens lassen sich optimieren, wenn sichergestellt ist, daß der mit den biometrischen Merkmalen des berechtigten Benutzers assoziierte Merkmalsvektor einer der Mustervektoren ist. Dies läßt sich erreichen, indem das System sich in einer Initialisierungsphase an die biometrischen Merkmale des berechtigten Benutzers adaptiert (Codebuchadaption).

Die Vektorquantisierung ist nicht das einzige Verfahren das im Zusammenhang mit der Erfindung eingesetzt werden kann. Dem Fachmann sind andere Verfahren geläufig, die deshalb hier nicht erläutert werden müssen.

Die Berechnung der Authentisierungsinformation FPAUTINF aus den biometrischen Merkmalen eines Benutzers durch Vektorquantisierung ist - wenn man vom Wortlaut ausgeht - eigentlich auch mit einer "Speicherung der PIN" im Gerät verbunden, da ja jedem Mustervektor des Codebuches eine prinzipiell mögliche Authentisierungsinformation (FPAUTINF) zugeordnet ist. Diese ist aber in fast allen Fällen (bis auf einen, nämlich den des Merkmalsvektors des berechtigten Benutzers) nicht wirklich zur Authentifikation geeignet. Es sind also z.B. im Falle einer fünfstelligen alphanumerischen PIN im Idealfall alle denkbaren PINs und zu jeder ein Mustervektor so gespeichert, daß nur bei hinreichend genauer Erfassung des Mustervektors im Sensor die gültige PIN addressiert werden kann. Obwohl die korrekte PIN also demnach "im Gerät gespeichert ist", geht sie in der großen Zahl der denkbaren PINs unauffindbar unter, nur auffindbar für den Besitzer der korrekten biometrischen Merkmale. Diese Umstände sind nicht gemeint, wenn der Standard das Speichern der PIN im Gerät verbietet.

Beim GSM-Standard ist das Speichern der PIN im Gerät nicht erlaubt. Oft ist jedoch ein Wechsel der PIN nötig, z.B. weil diese einem Dritten bekannt geworden ist. Wir aber die PIN aus dem Fingerbabdruck ermittelt (d.h. berechnet), scheint dies zunächst unmöglich, das ein Wechsel des Fingerabdrucks oder anderer biometrischer Merkmale nicht möglich ist. Um dennoch dem Benutzer die Möglichkeit zu geben, seine PIN zu wechseln sieht die Erfindung in einer bevorzugten Ausführungsform vor, daß statt nur eines Berechnungsverfahrens gleich ein ganzer Satz solcher Verfahren im Gerät zur Verfügung steht. Jedem einzelnen Berechnungsverfahren könnte eine laufende Nummer zugeordnet sein, so daß ein dazu berechtigter Benutzer das verwendete Verfahren jederzeit ändern könnte. Da jedes Verfahren (M1,...,Mn) für ein und denselben Fingerabdruck (BM) eine anderen PIN (FPAUTINF1,...,FPAUTINFn) berechnet, hat der Benutzer soviele PINs zur Auswahl, wie es verschiedene Verfahren zu ihrer Berechnung gibt.

Diese Ausführungsform der Erfindung läßt sich ebenfalls mit der Vektorquantisierung realisieren, wobei eben nicht nur ein Codebuch sondern mehrere Codebücher von Mustervektoren vorzusehen sind. Jedes Codebuch hat eine Nummer und es kann über diese Nummer ausgewählt werden. Andere Verfahren hängen möglicherweise von einem Parameter ab. Wir dieser Parameter geändert, ergibt sich eine andere mathematische Abbildung. Ist die Abhängigkeit von diesem Parameter ausreichend komplex, wird es praktisch unmöglich sein, die Änderung der Authentisierungsinformation bei Änderung des Parameters zu erraten. Bestimmte Typen Neuronaler Netze (z.B. sogenannte Multilayer Perceptrons) sind zur Realisierung derartiger Abbildungen geeignet. Bei Lösungen auf der Basis solcher Neuronaler Netzwerke ist die PIN tatsächlich nirgendwo als Zeichenfolge gespeichert, sondern lediglich (implizit verschlüsselt) in der Netzwerkarchitektur und in den Gewichtskoeffizienten.

Diese Ausführungsvariante der vorliegenden Erfindung erscheint besonders im Hinblick darauf von Interesse, daß viele Menschen eine Reihe von verschiedenen Paßwörtern für ganz unterschiedliche Zwecke oder Geräte benötigen. Es wird zunehmend schwieriger, sich diese vielen Paßwörter zu merken. Bei Verwendung einer Mehrzahl von Verfahren (M1,...,Mn) (mathematischen Abbildungen) zur Berechnung einer Mehrzahl von Authentisierungsinformationen (FPAUTINF1,...,FPAUTINFn) aus einem einzigen Merkmalsvektor (bzw. Sensordatensatz) wird dieses Problem auf die Erfassung benutzerspezifischer unveräußerlicher biometrischer Merkmale durch geeignete Sensoren reduziert.

Zur Auswahl eines bestimmten Verfahrens ist lediglich in einem dafür vorzusehenden Kontext der Benutzeroberfläche eine Kennzahl eines solchen Verfahrens einzugeben. Hierdurch läßt sich per Software die Datenverarbeitungseinrichtung entsprechend einrichten.

Natürlich können auch die biometrischen Merkmale mehrerer Personen mit der richtigen PIN oder mit mehreren richtigen PINs verknüpft sein. Soll das Gerät ausnahmsweise nur in Verbindung mit einer Person, d.h. mit nur genau einer SIM-Karte, benutzbar sein, kann die Freigabe zusätzlich an weitere Sicherheitsmechanismen wie Gerätecodes, etc. genknüpft sein. Die Erfindung erlaubt hier jede Art von Flexibilität bei höchster Sicherheit und Kompatibilität zum Standard.

Speziell bei der Änderung einer PIN kann eine weitere nützliche Ausführungsform der Erfindung hilfreich sein, bei der ein Display zur Anzeige einer Authentifikationsinformation vorgesehen ist. Ein derartiges Display ist bei vielen Geräten dieser Art bereits ohnehin vorhanden und kann daher auch für diese Zwecke genutzt werden. Will ein Benutzer seine über die Tastatur einzugebende, zur SIM-Karte passende oder auf ihr gespeicherte Authentifikationsinformation (AUTINF), z.B. die PIN, ändern, stehen ihm bei einigen Berechnungsverfahren gegebenenfalls nicht alle denkbaren Zeichen-Ziffern-Kombinationen als PINs zur Verfügung, z.B. weil das Codebuch kleiner ist als die Zahl aller denkbaren PINs. In diesem Fall genügt eine Veränderung des Parameters des verwendeten Berechnungsverfahrens (z.B. Veränderung der Codebuchnummer, oder Veränderung eines Parameters eines Neuronalen Netzes), um die Zuordnung der PINs zu den Mustervektoren und damit die seinem individuellen Merkmalsvektor zugeordnete PIN zu verändern. Er könnte danach die PIN auf der SIM-Karte (oder allgemeiner: die einzugebende PIN ) nicht im selben Sinne verändern, ohne sie zu kennen. Das ist aber für die weitere Benutzung im Sinne unserer Aufgabe notwendig. Die geänderte PIN erfährt der dazu berechtigte Benutzer deshalb vorzugsweise durch eine entsprechende, gegebenenfalls einmalige kurzzeitige Anzeige dieser PIN nach der Änderung in einem Display des Gerätes. Andere Lösungen (z.B. Postzustellung der neuen PIN) sind denkbar.

Die Erfindung ist natürlich nicht auf Mobiltelefone, insbesondere nicht auf Mobiltelefone nach dem GSM-Standard beschränkt. Der Fachmann erkannt anhand der vorliegenden Beschreibung unschwer, wie die Erfindung im Falle anderer Geräte oder Systeme zu realisieren ist.

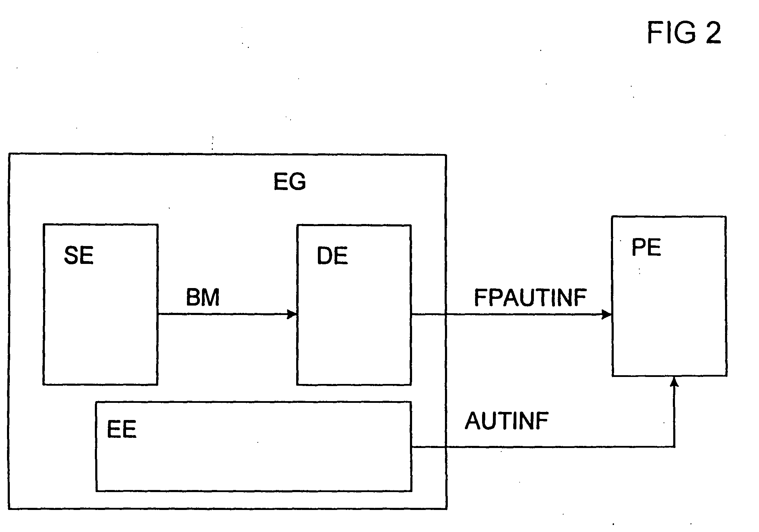

Insbesondere ist die Erfindung nicht auf den Fall beschränkt, daß die Prüfeinheit (PE) in das Gerät integriert ist. Figur 2 zeigt den wichtigen Fall eines Gerätes, daß z.B. über ein Kommnikationsnetz mit mindestens einem anderen Gerät verbunden ist, in dem sich die Prüfeinrichtung befindet. Aber sogar die Datenverarbeitungseinheit oder derjenige Teil der Datenverarbeitungseinheit (DE), der für die Berechnung der Authentifikationsinformation FPAUTINF aus den biometrischen Merkmalen BM des Benutzers verantwortlich ist, muß sich nicht unbedingt in dem Gerät befinden. Natürlich muß das Gerät nicht über eine integrierte Sensoreinrichtung (SE) oder eine integrierte Tastatur (EE) verfügen. Diese Einrichtungen können selbstverständlich auch in Form externer Module an das Gerät angeschlossen werden. Diese Ausführungsformen der Erfindung sollen durch die Verfahrensansprüche geschützt werden.

## Patentansprüche

1. Elektronisches Gerät (EG), insbesondere Gerät zur Informationsverarbeitung oder zur Telekommunikation mit
a) einer Sensoreinrichtung (SE) zur Erfassung biometrischer Merkmale (BM) eines Benutzers des Gerätes, insbesondere zur Erfassung von Fingerabdrücken;
b) einer Datenverarbeitungseinrichtung (DE) zur Ermittlung einer Authentifikation eines Benutzers dienenden Information (FRAUTINF) aus erfassten biometrischen Merkmalen;
c) einer Eingabeeinrichtung (EE) zur Eingabe von Informationen mit der Möglichkeit zur Eingabe einer zur Authentifikation dienenden Information (AUTINF) über diese Eingabeeinrichtung;
d) einer Prüfeinrichtung (PE) innerhalb des Gerätes (EG) zur Prüfung der ermittelten oder eingegebenen Authentifikationsinformation und zur Freigabe von Gerätefunktionen für diesen Benutzer, falls die Prüfung erfolgreich ist.

2. Gerät nach Anspruch 1 dessen Datenverarbeitungseinrichtung (DE) so eingerichtet werden kann, daß die zur erfolgreichen Authentizitätsprüfung über die Eingabeeinrichtung einzugebende Authentifikationsinformation (PIN) identisch ist mit der aus den biometrischen Merkmalen eines berechtigten Benutzers ermittelten Authentifikationsinformation (FPPIN).

3. Gerät nach einem der vorhergehenden Ansprüche, dessen Datenverarbeitungseinrichtung (DE) über eine Mehrzahl von Verfahren (M1,...,Mn) verfügt, aus den erfaßten biometrischen Merkmalen eines Benutzers zur Authentifikation dieses Benutzers dienende Informationen (FPAUTINF1,...,FPAUTINFn) zu ermitteln.

4. Gerät nach Anspruch 3, dessen Datenverarbeitungseinrichtung einem dazu berechtigten Benutzer ermöglicht, aus der Mehrzahl von Verfahren zur Ermittlung einer Authentifikationsinformation aus biometrischen Merkmalen ein von ihm gewünschtes Verfahren auszuwählen.

5. Gerät nach einem der vorhergehenden Ansprüche mit Mitteln zur Anzeige einer aus biometrischen Merkmalen eines Benutzers ermittelten Authentifikationsinformation (FPAUTINF).

6. Verfahren zur Authentifikation eines Benutzers eines Gerätes (EG), bei dem der Benutzer die Möglichkeit hat, sich mit Hilfe von benutzerspezifischen biometrischen Merkmalen oder durch Eingabe einer Authentifikationsinformation über ein Informationseingabevorrichtung (EE) zu authentifizieren, wobei im ersten Fall biometrische Merkmale (BM) des Benutzers durch eine Sensoreinrichtung (SE) erfasst werden und aus den erfassten biometrischen Merkmalen eine zur Authentifikation dienenden Information (AUTINF) ermittelt wird, und wobei im zweiten Fall die vom Benutzer über die Eingabevorrichtung eingegebene Authentifikationsinformation von derselben Prüfeinrichtung (PE) innerhalb des Gerätes (EG) geprüft wird.

7. Verfahren zur Authentifikation eines Benutzers eines Gerätes nach Anspruch 6 mit folgenden Schritten:
a) die Ermittlung eines Merkmalsvektors aus Meßdaten einer Sensoreinrichtung,
b) eine Vektorquantisierung des ermittelten Merkmalsvektors, und
c) die Prüfung einer zu dem Ergebnis der Vektorquantisierung gehörenden Authentifikationsinformation.
